# EUROPEAN PATENT APPLICATION

(11) **EP 4 095 781 A1**
(43) Date of publication of application: **30.11.2022**
(21) Application number: 22175682.8
(22) Date of filing: 26.05.2022
(51) Int. Cl.: G06Q 20/08

(54) **METHOD AND SYSTEM FOR PAYMENT WHEN NETWORK IS BLOCKED**

(30) Priority: 28.05.2021 KR 20210069225; 19.07.2021 KR 20210094001
(71) Applicant: Shinhan Card Co., Ltd., Jung-gu Seoul 04551 (KR); NvirLabs.Co.,Ltd., Seoul 03925 (KR)
(72) Inventor: RYOO, Tae Hyun, 13532 Seongnam-si (KR); LEE, Je Chul, 02874 Seoul (KR); PARK, Hye Jin, 08392 Seoul (KR); LEE, Jae Yong, 04129 Seoul (KR); BANG, Dae Sung, 22398 Incheon (KR); JO, Hae Na, 22398 Incheon (KR)
(74) Representative: Morrall, Jonathan Ian McLachlan

(57) **Abstract**

Provided are a method and system for payment when a network is blocked. A method of providing a remittance service performed by a first device, the method including requesting a financial institution system to issue a block key layer for at least a portion of an amount of money retained by a user of the first device, receiving the block key layer from the financial institution system in response to the request, receiving, from a second device, remittance request data for an amount of remittance, obtaining, from the received block key layer, a block key layer corresponding to the amount of remittance, and transmitting, to the second device, a file for the block key layer corresponding to the amount of remittance.

## Description

### BACKGROUND

### 1. Field of the Invention

One or more example embodiments relate to a technology for payment when a network is blocked.

### 2. Description of the Related Art

In a method for payment and remittance according to a related art, monetary transactions such as deposit and withdrawal transactions are performed based on online. The method for payment and remittance according to a related art has a limitation in that payment or remittance cannot be performed in a situation in which a wired/wireless network is blocked due to a disaster situation or the like. In the monetary transactions, omission is taboo because accuracy is important, but the network may be blocked by external influences. Therefore, even when the network is blocked, there is a need for research on a method in which details of a monetary transaction are not omitted.

### SUMMARY

According to an aspect, there is provided a method of providing a remittance service performed by a first device, the method including requesting a financial institution system to issue a block key layer for at least a portion of an amount of money retained by a user of the first device, receiving the block key layer from the financial institution system in response to the request, receiving, from a second device, remittance request data for an amount of remittance, obtaining, from the received block key layer, a block key layer corresponding to the amount of remittance, and transmitting, to the second device, a file for the block key layer corresponding to the amount of remittance.

The obtaining of the block key layer may include performing division on the received block key layer, when a minimum non-zero unit of the amount of remittance is smaller than a minimum unit of the received block key layer, and obtaining, from a result of the division, the block key layer corresponding to the amount of remittance.

The financial institution system may be configured to perform integrity verification by performing decryption on at least some block key layers among remaining block key layers excluding the block key layer corresponding to the amount of remittance, when the first device is connected to a network to transmit the at least some block key layers to the financial institution system, and add an amount of money corresponding to the at least some block key layers to the amount of money retained by the user of the first device stored in the financial institution system, when integrity is verified.

The transmitting, to the second device, of the file for the block key layer may include transmitting, to the second device, the file for the block key layer using at least one of a quick response (QR) code, a barcode, near field communication (NFC), and direct communication between the first device and the second device.

The financial institution system may be configured to generate a block key by performing first encryption in a predetermined minimum unit on an amount of money requested to be issued of the amount of money retained by the user of the first device, generate a block key layer corresponding to the amount of money requested to be issued using the generated block key, and perform second encryption on the block key layer corresponding to the amount of money requested to be issued, and transmit, to the first device, the block key layer corresponding to the amount of money requested to be issued on which the second encryption is performed.

The first encryption and the second encryption may be performed using different encryption keys.

The financial institution system may be configured to generate an upper block key layer using an encrypted lower block key layer, and perform the second encryption on the generated upper block key layer.

The upper block key layer may include a plurality of lower block key layers and a confirmation key.

The predetermined minimum unit may be a smallest unit for dividing an amount of money into blocks, and may be determined based on a user selection.

According to another aspect, there is provided a method of providing a remittance service performed by a second device, the method including generating first data including remittance-related information for requesting remittance from a first device, transmitting the first data to the first device, receiving encrypted second data from the first device in response to the first data, generating decryption result data by decrypting, based on unique information of the second device, the encrypted second data, and verifying the decryption result data, and storing a block key layer included in the verified decryption result data.

The remittance-related information may include at least one of an amount of the remittance, a key of the second device, a transaction number, and an identification number of the second device.

The unique information of the second device may include a key of the second device, and a transaction number on transaction details of a user corresponding to the second device.

According to still another aspect, there is provided a first device that performs a method of providing a remittance service, the first device including a memory and a processor. The memory may be configured to store instructions executable by the processor. When the instructions are executed by the processor, the processor may be configured to control the first device to request a financial institution system to issue a block key layer for at least a portion of an amount of money retained by a user of the first device, receive the block key layer from the financial institution system in response to the request, receive, from a second device, remittance request data for an amount of remittance, obtain, from the received block key layer, a block key layer corresponding to the amount of remittance, and transmit, to the second device, a file for the block key layer corresponding to the amount of remittance.

The processor may be configured to control the first device to perform division on the received block key layer, when a minimum non-zero unit of the amount of remittance is smaller than a minimum unit of the received block key layer, and obtain, from a result of the division, the block key layer corresponding to the amount of remittance.

The financial institution system may be configured to perform integrity verification by performing decryption on at least some block key layers among remaining block key layers excluding the block key layer corresponding to the amount of remittance, when the first device is connected to a network to transmit the at least some block key layers to the financial institution system, and add an amount of money corresponding to the at least some block key layers to the amount of money retained by the user of the first device stored in the financial institution system, when integrity is verified.

The processor may be configured to control the first device to transmit, to the second device, the file for the block key layer using at least one of a QR code, a barcode, NFC, and direct communication between the first device and the second device.

The financial institution system may be configured to perform integrity verification by performing decryption on at least some block key layers among remaining block key layers excluding the block key layer corresponding to the amount of remittance, when the first device is connected to a network to transmit the at least some block key layers to the financial institution system, and add an amount of money corresponding to the at least some block key layers to the amount of money retained by the user of the first device stored in the financial institution system, when integrity is verified.

According to still another aspect, there is provided a second device that performs a method of providing a remittance service, the second device including a memory and a processor. The memory may be configured to store instructions executable by the processor. When the instructions are executed by the processor, the processor is configured to control the second device to generate first data including remittance-related information for requesting remittance from a first device, transmit the first data to the first device, receive encrypted second data from the first device in response to the first data, generate decryption result data by decrypting, based on unique information of the second device, the encrypted second data, and verify the decryption result data, and store a block key layer included in the verified decryption result data.

The remittance-related information may include at least one of an amount of the remittance, a key of the second device, a transaction number, and an identification number of the second device.

The unique information of the second device may include a key of the second device, and a transaction number on transaction details of a user corresponding to the second device.

Additional aspects of example embodiments will be set forth in part in the description which follows and, in part, will be apparent from the description, or may be learned by practice of the disclosure.

According to example embodiments, payment may be normally performed even when a network is blocked or the network is in an offline state.

According to example embodiments, a safe transaction may be promoted by performing verification on a counterparty.

According to example embodiments, a payment function with improved security may be provided.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a schematic diagram illustrating a system for payment when a network is blocked according to an example embodiment;
FIG. 2 is a flowchart illustrating a method of providing a remittance service performed by a first device according to an example embodiment;
FIG. 3 is a flowchart illustrating a method of providing a remittance service performed by a second device according to an example embodiment;
FIG. 4 is a flowchart illustrating a method of encrypting an amount of money requested to be issued according to an example embodiment;
FIG. 5 is a flowchart illustrating a method of decrypting an amount of remittance according to an example embodiment;
FIG. 6 is a flowchart illustrating a method of providing a remittance service performed between entities according to an example embodiment;
FIG. 7 is a diagram illustrating a configuration of a first device according to an example embodiment; and
FIG. 8 is a diagram illustrating a configuration of a second device according to an example embodiment.

### DETAILED DESCRIPTION

The following structural or functional descriptions of example embodiments described herein are merely intended for the purpose of describing the example embodiments described herein and may be implemented in various forms. Here, the example embodiments are not construed as limited to the disclosure and should be understood to include all changes, equivalents, and replacements in the idea and the technical scope of the disclosure.

Although terms of "first," "second," and the like are used to explain various components, the components are not limited to such terms. These terms are used only to distinguish one component from another component. For example, a first component may be referred to as a second component, or similarly, the second component may be referred to as the first component in the scope of the present disclosure.

When it is mentioned that one component is "connected" or "accessed" to another component, it may be understood that the one component is directly connected or accessed to another component or that still other component is interposed between the two components.

As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, example embodiments will be described in detail with reference to the accompanying drawings. When describing the example embodiments with reference to the accompanying drawings, like reference numerals refer to like components and a repeated description related thereto will be omitted.

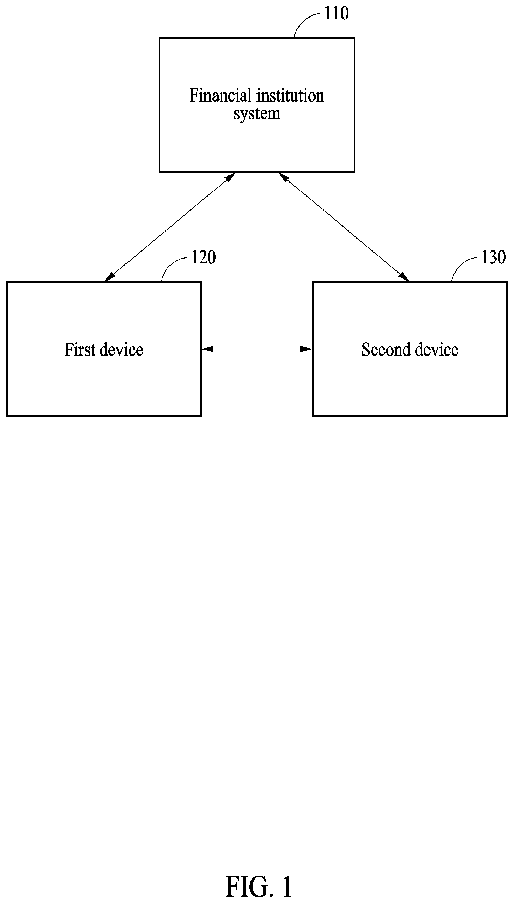

FIG. 1 is a schematic diagram illustrating a system for payment when a network is blocked according to an example embodiment.

The system for payment when the network is blocked may perform a method of providing a remittance service in an offline state in which the network is blocked so that payment is performed safely and accurately even when the network is blocked by a disaster situation or other external situations. The method of providing the remittance service in the offline state in which the network is blocked described herein may be performed not only in the offline state in which the network is blocked, but also in an online state in which the network is connected.

Referring to FIG. 1, the system for payment when the network is blocked may include a financial institution system 110, a first device 120, and a second device 130. The financial institution system 110 may be a system of an institution including a bank, a credit card company, or other financial institutions. The first device 120 and the second device 130 may be user terminals or computing devices on which an application or program related to a financial service, payment, financial transaction, and the like are installed and executable. When the application or program related to the financial service, payment, financial transaction, and the like is installed on the first device 120 and the second device 130, a vaccine application or vaccine program may be also installed on the first device 120 and the second device 130. The application or program related to the financial service, payment, financial transaction, and the like may be serviced separately from the vaccine application or vaccine program, or may be serviced as a single application. The first device 120 and the second device 130 may execute the application or program related to the financial service, payment, financial transaction, and the like after the vaccine application or vaccine program is executed. When the vaccine application or vaccine program is executed, a forgery confirmation process may be performed to check forgery.

The second device 130 may request remittance from the first device 120. In an example embodiment, the second device 130 may generate first data including remittance-related information for requesting remittance from the first device 120, and transmit the first data to the first device 120. The first device 120 may receive the first data, and identify an amount of remittance to be remitted to the second device 130. The first device 120 may obtain, from block key layers stored in the first device 120, a block key layer corresponding to the amount of remittance. The first device 120 may generate, based on the block key layer corresponding to the amount of remittance, encrypted second data, and transmit the encrypted second data to the second device 130. The second device 130 may receive the second data and decrypt the encrypted second data, thereby generating decryption result data from the second data. The second device 130 may store, in the second device 130, a block key layer included in the decryption result data.

The financial institution system 110 may receive, from the first device 120, a remaining block key layer excluding the block key layer corresponding to the amount of remittance from the block key layers stored in the first device 120. The financial institution system 110 may perform integrity verification using the remaining block key layer. When integrity is verified, the financial institution system 110 may add an amount of money corresponding to the remaining block key layer to an amount of money retained by a user of the first device 120 stored in the financial institution system 110.

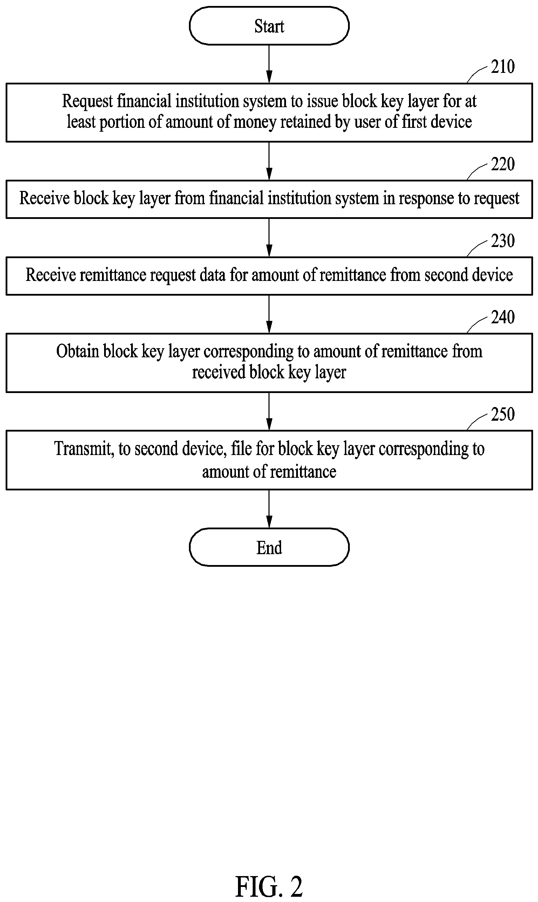

FIG. 2 is a flowchart illustrating a method of providing a remittance service performed by a first device according to an example embodiment.

Referring to FIG. 2, in operation 210, the first device may request a financial institution system to issue a block key layer for at least a portion of an amount of money retained by a user of the first device.

The financial institution system may generate a block key by performing first encryption in a predetermined minimum unit on an amount of money requested to be issued of the amount of money retained by the user of the first device, generate a block key layer corresponding to the amount of money requested to be issued using the generated block key, and perform second encryption on the block key layer corresponding to the amount of money requested to be issued. In response to the request, the financial institution system may transmit, to the first device, the block key layer corresponding to the amount of money requested to be issued on which the second encryption is performed. Here, the first encryption and the second encryption may be performed using different encryption keys. In addition, the financial institution system may generate an upper block key layer using an encrypted lower block key layer, and perform the second encryption on the generated upper block key layer. The upper block key layer may include a plurality of lower block key layers and a confirmation key. The predetermined minimum unit may be a smallest unit for dividing an amount of money into blocks, and may be determined based on a user selection. The predetermined minimum unit may be determined by receiving the user selection, or may be determined based on a preset user selection. The amount of money retained by the user of the first device may be a retained amount of money registered in the financial institution system, as possession of a user or legal entity corresponding to the first device.

In operation 220, the first device may receive the block key layer from the financial institution system. In operation 230, the first device may receive, from the second device, remittance request data for an amount of remittance.

The first device may perform, based on details of a transaction with the second device stored or listed in a database or a past database, integrity verification on the second device. The first device may perform, based on data stored or listed in the past database, integrity verification on the second device, thereby further improving security.

In operation 240, the first device may obtain a block key layer corresponding to the amount of remittance from the block key layer received from the financial institution system. When a minimum non-zero unit of the amount of remittance is smaller than a minimum unit of the received block key layer, the first device may perform division on the received block key layer, and obtain, from a result of the division, the block key layer corresponding to the amount of remittance. For example, in a situation in which the amount of remittance is 9,800 won and an amount of money of the block key layer stored in the first device is 11,000 won, when the minimum unit of the block key layer stored in the first device is 1,000 won, the minimum non-zero unit of the amount of remittance may be 100 won, and the minimum unit of the block key layer stored in the first device may be 1,000 won. Thus, the minimum non-zero unit of the amount of remittance may be smaller than the minimum unit of the block key layer stored in the first device. In this case, the first device may perform division on the block key layer stored in the first device. In order to obtain the block key layer corresponding to the amount of remittance from the block key layer stored in the first device, the first device divide each block key layer of the amount of remittance corresponding to a unit of 1,000 won into ten block key layers each corresponding to a unit of 100 won. The first device may perform division on the block key layer stored in the first device until the minimum non-zero unit of the amount of remittance is larger than or same as the minimum unit of the block key layer stored in the first device.

In an example embodiment, before the block key layer corresponding to the amount of remittance is obtained, the first device may verify transaction details or a history database. When the amount of remittance is greater than the retained amount of money, the first device may not obtain the block key layer corresponding to the amount of remittance.

In operation 250, the first device may transmit, to the second device, a file for the block key layer corresponding to the amount of remittance including the block key layer corresponding to the amount of remittance. The first device may transmit, to the second device, the file for the block key layer using, for example, at least one of a quick response (QR) code, a barcode, near field communication (NFC), and direct communication between the first device and the second device. Here, a method or means of transmitting the file for the block key layer to the second device is not limited to the example specified herein, and other methods or means may be applied.

When the first device is connected to a network to transmit, to the financial institution system, at least some block key layers among remaining block key layers excluding the block key layer corresponding to the amount of remittance, the financial institution system may perform integrity verification by performing decryption on the at least some block key layers. When integrity is verified, the financial institution system may add an amount of money corresponding to the at least some block key layers to the amount of money retained by the user of the first device stored in the financial institution system.

Depending on an example embodiment, the first device may include a database, and the database of the first device may include a current database for recording data currently being processed and a past database for recording past transaction details. The past database may be also referred to as a history database. An encrypted block key layer with a completed transaction may be deleted from the current database or stored in the past database. In addition, at least one of first data and the second data corresponding to the encrypted block key layer may be also stored or listed in the past database together with the encrypted block key layer. Thereafter, when at least one of the first data and the second data stored in the past database is re-recognized or when a request for data provision is received from the second device, the first device may re-provide at least one of the first data and the second data stored in the past database. The second device may re-recognize at least one of the provided first data and second data. However, at least one of the recognized first data and second data may correspond to a transaction for which payment has been already completed in the past, and accordingly a block key layer or transaction corresponding to at least one of the first data and second data may not be normally performed. Thus, the first device and the second device may prevent a duplicate transaction. In addition, even when a device other than the second device recognizes data on a transaction performed with the second device, a transaction may not be performed because a decryption key for the data does not match.

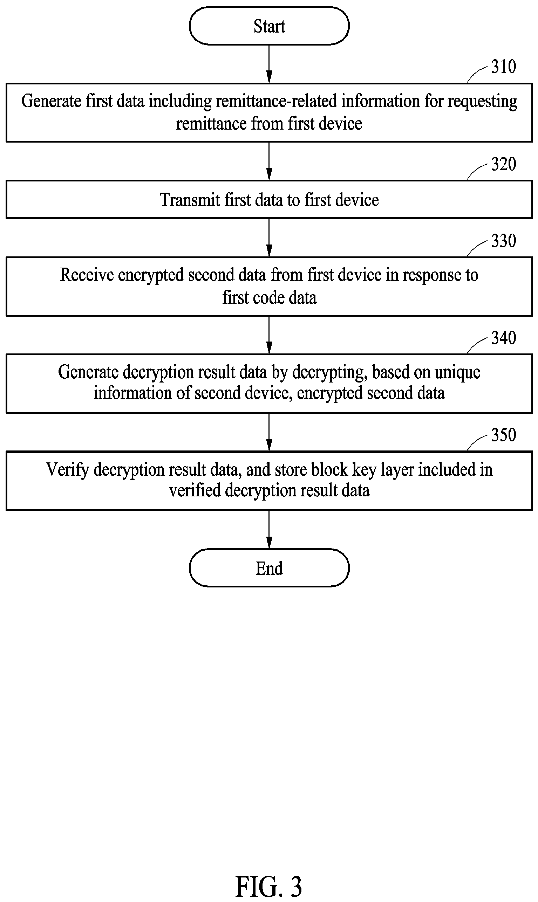

FIG. 3 is a flowchart illustrating a method of providing a remittance service performed by a second device according to an example embodiment.

In operation 310, the second device may generate first data including remittance-related information for requesting remittance from a first device. Here, the remittance-related information may include, for example, at least one of an amount of remittance, a key of the second device, a transaction number, and an identification number of the second device. The key of the second device may be also referred to as a mobile phone key, and may include a universally unique identifier (UUID) and an international mobile equipment identity (IMEI).

The second device may transmit the first data to the first device in operation 320. For example, the second device may transmit the first data to the first device using at least one of a QR code, a barcode, NFC, and direct communication between the first device and the second device. Here, a method or means in which the second device transmits the first data to the first device is not limited to the example specified herein, and other methods or means may be applied. After operation 320, the first device may perform operations 230 to 250 illustrated in FIG. 2. The first data may correspond to the remittance request data illustrated in FIG. 2.

In operation 330, the second device may receive encrypted second data from the first device in response to the first data. In operation 340, the second device may generate decryption result data by decrypting, based on unique information of the second device, the encrypted second data. The second device may perform integrity verification by verifying the decryption result data. The unique information of the second device may include a key of the second device and a transaction number on transaction details of the user corresponding to the second device. The encrypted second data may not include the unique information of the second device. The second device may generate the decryption result data by decrypting, based on preset unique information of the second device, the encrypted second data. The decryption result data may include a block key layer corresponding to the amount of remittance.

In operation 350, the second device may store, in the second device, the block key layer included in the decryption result data with verified integrity. Alternatively, the second device may record in a database of the second device. The second device may record, in the database, the unique information of the second device used for encryption of the block key layer, a decryption key used for decryption of the encrypted block key layer, the decryption result data, and key information of the block key layer.

The first device and the second device may perform detection of an abnormal transaction using a fraud detect system (FDS) function on an application related to a financial institution running on the first device and the second device. When the abnormal transaction is detected, the use of the application may be suspended based on an operation policy of the financial institution. In this case, a user of at least one of the first device and the second device on which the use of the application is suspended may be recommended to visit the financial institution.

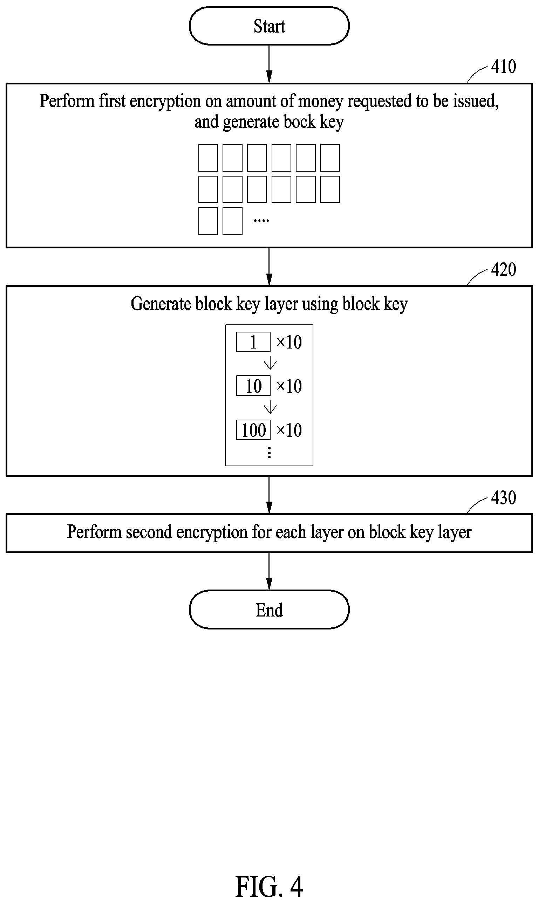

FIG. 4 is a flowchart illustrating a method of encrypting an amount of money requested to be issued according to an example embodiment.

In the detailed description of FIG. 4, a method in which a financial institution system generates a block key layer may be described based on an example embodiment in which an amount of money requested to be issued of an amount of money retained by a user of a first device stored in the financial institution system is encrypted.

The financial institution system may receive, from the first device, request data for requesting issuance of a block key layer for at least a portion of the amount of money retained by the user of the first device. After the request data for requesting issuance of the block key layer for at least the portion of the retained amount of money is received, the financial institution system may perform first encryption on the amount of money to be requested to be issued of the retained amount of money, and generate a block key in operation 410. The first device may perform the first encryption in a predetermined minimum unit on the amount of money requested to be issued to generate the block key. Respective block keys may be encrypted based on at least one of different unique numbers, identification numbers, and encryption keys. For example, when the predetermined minimum unit is 10 won and the amount requested to be issued is 1,000,000 won, the financial institution system may encrypt the amount of money requested to be issued of the retained amount of money with 100,000 block keys.

In operation 420, the financial institution system may generate a block key layer corresponding to the amount of money requested to be issued using the generated block key. The block key layer may include a plurality of layers, and each layer may represent a unit of an amount of money. In operation 430, the financial institution system may perform second encryption for each layer on the block key layer corresponding to the amount of money requested to be issued. Here, the first encryption and the second encryption may be performed using different encryption keys.

The financial institution system may generate an upper block key layer using an encrypted lower block key layer, and may perform the second encryption on the generated upper block key layer. The financial institution system may generate a block key layer of a first layer by combining a predetermined number of block keys. In addition, the financial institution system may combine block key layers of a second layer by combining a predetermined number of block key layers of the first layer. The financial institution system may stop generating the block key layer when an n-th layer has one block key layer, or when the number of block key layers of the n-th layer is less than a predetermined number for combining the block key layers.

The upper block key layer may include a plurality of lower block key layers and a confirmation key. Here, the predetermined minimum unit may be a smallest unit for dividing an amount of money into blocks, and may be determined based on a user selection or user input. Here, the confirmation key may be a key for allowing at least one of the first device, the second device, or another device to perform verification on a block key layer by performing decryption on an encrypted block key layer. In addition, respective layers of the block key layer may be encrypted using an encryption key different from those of other layers.

The financial institution system may generate a lowest block key layer using a plurality of block keys. For example, the financial institution system may generate a block key layer by combining ten block keys divided in a unit of 10 won. When the amount of money requested to be issued is 1,000,000 won, the financial institution system may generate a block key layer in a unit of 10 won by combining ten block keys. In addition, the financial institution system may generate a block key layer in a unit of 100 won by combining ten block key layers in a unit of 10 won, and generate a block key layer in a unit of 1,000 won by combining ten block key layers in a unit of 100 won. In addition, the first device may generate a block key layer in a unit of 10,000 won by combining ten block key layers in a unit of 1,000 won. The financial institution system may generate a block key layer in a unit of 100,000 won by combining ten block key layers in a unit of 10,000 won. In addition, the financial institution system may generate a block key layer in a unit of 500,000 won by combining five block key layers in a unit of 100,000 won.

Here, the block key layer in a unit of 100 won may be an upper block key layer of the block key layer in a unit of 10 won, and the block key layer in a unit of 10 won may be a lower block key layer of the block key layer in a unit of 100 won. In addition, the block key layer in a unit of 1,000 won may be an upper block key layer of the block key layer in a unit of 100 won, and the block key layer in a unit of 100 won may be a lower block key layer of the block key layer in a unit of 1,000 won. The block key layer in a unit of 1,000 won may be a lower block key layer of the block key layer in a unit of 10,000 won, and the block key layer in a unit of 10,000 won may be an upper block key layer of the block key layer in a unit of 1,000 won. The block key layer in a unit of 100,000 won may be an upper block key layer of the block key layer in a unit of 10,000 won, and the block key layer in a unit of 10,000 won may be a lower block key layer of the block key layer in a unit of 100,000 won. The block key layer in a unit of 500,000 won may be an upper block key layer of the block key layer in a unit of 100,000 won, and the block key layer in a unit of 100,000 won may be a lower block key layer of the block key layer in a unit of 500,000 won.

The method of encrypting the amount of money requested to be issued is described above using an example in which the predetermined minimum unit is 1 won, and ten block key layers are combined. However, the predetermined minimum unit and the number of combinations of block keys for generating a block key layer or block key layers are not limited to the above-described example. The minimum unit may be referred to as a minimum distribution unit depending on an example embodiment.

For example, when the amount of money requested to be issued is 1,000,000 won, the financial institution system may generate the amount of money requested to be issued with one thousand block keys in a unit of 10 won, one hundred block key layers in a unit of 100 won, eight block key layers in a unit of 10,000 won, four block key layers in a unit of 100,000 won, and a block key layer in a unit of 500,000 won.

The financial institution system may transmit, to the first device, a block key layer corresponding to at least a portion corresponding to request data or a request among the generated block key layers of the amount of money requested to be issued, thereby issuing the block key layer.

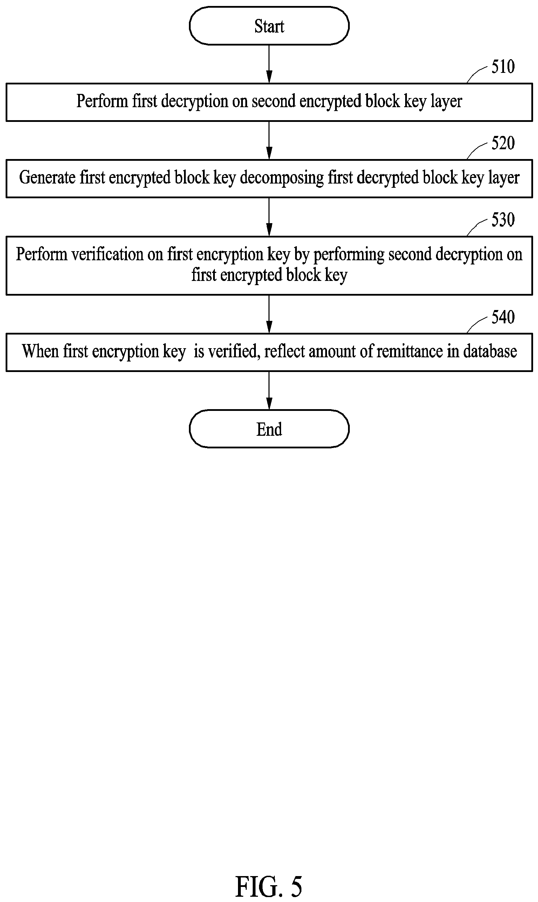

FIG. 5 is a flowchart illustrating a method of decrypting an amount of remittance according to an example embodiment.

A method of decrypting an encrypted block key layer described herein may be performed by at least one of a first device, a second device, or a financial institution system. It is described herein that the method of decrypting the encrypted block key layer is performed by the second device, but is not limited to the example embodiment described herein. Respective operations illustrated in FIG. 5 may represent the method of decrypting the encrypted block key layer performed by the method of encrypting the amount of money performed in FIG. 4.

The first device may transmit, to a second device, a file for a block key layer corresponding to the amount of remittance. The file for the block key layer corresponding to the amount of remittance may include a second encrypted block key layer corresponding to the amount of remittance. In operation 510, the second device may perform first decryption on the second encrypted block key layer. In operation 520, the second device may generate a first encrypted block key by decomposing a first decrypted block key layer. In operation 530, the second device may perform verification on a first encryption key by performing second decryption on the first encrypted block key. When the first encryption key is verified, the second device may store the block key layer corresponding to the amount of remittance, and reflect the amount of remittance in the database in operation 540.

A process in which the financial institution system performs decryption on an encrypted block key layer may be performed when at least some of block key layers stored in the first device are received from the first device.

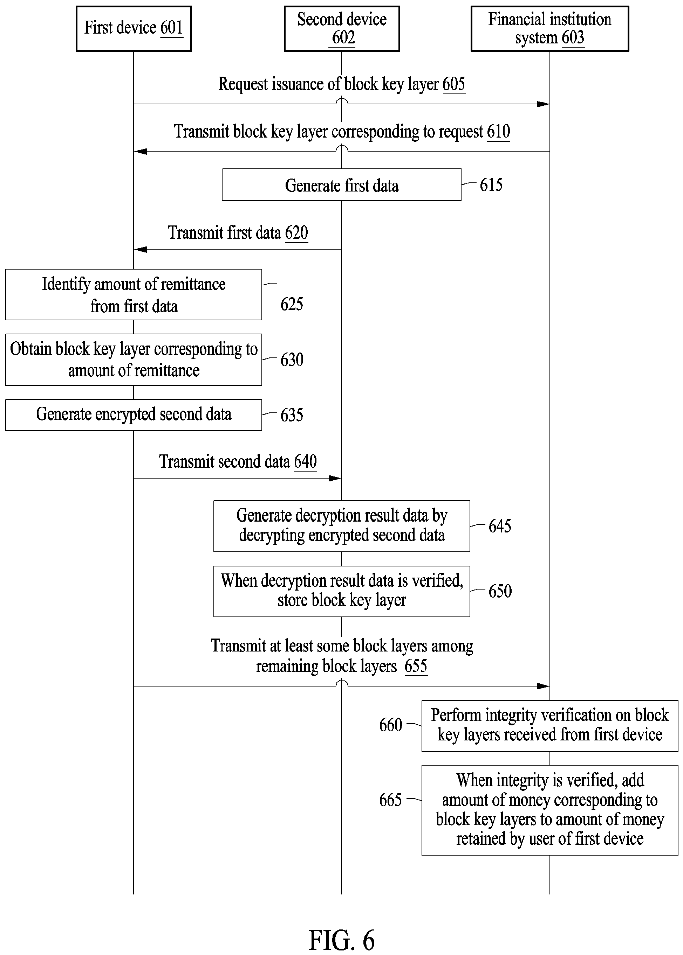

FIG. 6 is a flowchart illustrating a method of providing a remittance service performed between entities according to an example embodiment.

Referring to FIG. 6, the method of providing the remittance service may be performed between a first device 601, a second device 602, and a financial institution system 603.

In operation 605, the first device 601 may request the financial institution system 603 to issue block key layers for at least a portion of an amount of money retained by a user of the first device 601. In operation 610, the financial institution system 603 may issue block key layers corresponding to the request, and transmit the block key layers to the first device 601. The first device 601 may store the block key layers received from the financial institution system 603.

In operation 615, the second device 602 may generate first data including remittance-related information for requesting remittance from the first device 601. In operation 620, the second device 602 may transmit the first data to the first device 601.

In operation 625, the first device 601 may identify an amount of remittance to be remitted from the first data to the second device 602. In operation 630, the first device 601 may obtain a block key layer corresponding to the amount of remittance from the block key layers stored in the first device 601.

In operation 635, the first device 601 may generate, based on the block key layer corresponding to the amount of remittance, encrypted second data. In operation 640, the first device 601 may transmit the encrypted second data to the second device 602.

In operation 645, the second device 602 may generate decryption result data by decrypting, based on unique information of the second device 602, the encrypted second data.

Verification may be performed based on the decryption result data. When verification is completed, the second device 602 may store, in the second device 602, the block key layer corresponding to the amount of remittance in operation 650. In operation 655, the first device 601 may transmit, to the financial institution system 603, at least some block key layers among block key layers excluding the block key layer corresponding to the amount of remittance from the block key layers stored in the first device 601. The financial institution system 603 may perform integrity verification on the block key layers received from the first device 601 in operation 660. The financial institution system 603 may perform integrity verification on the block key layers by releasing the block key layers received from the first device 601 with a block key that is a minimum unit, and verifying a unique number of the block key. When integrity verification is performed, the financial institution system 603 may add the amount of remittance to the amount of money retained by the user of the first device 601 stored in the financial institution system 603 in operation 665. After verification is performed, the financial institution system 603 may convert the amount of remittance into cash or a related numerical value.

In the above-described example embodiment, operations 615 to 650 may be performed both in a state in which a network is connected and in a state in which the network is blocked.

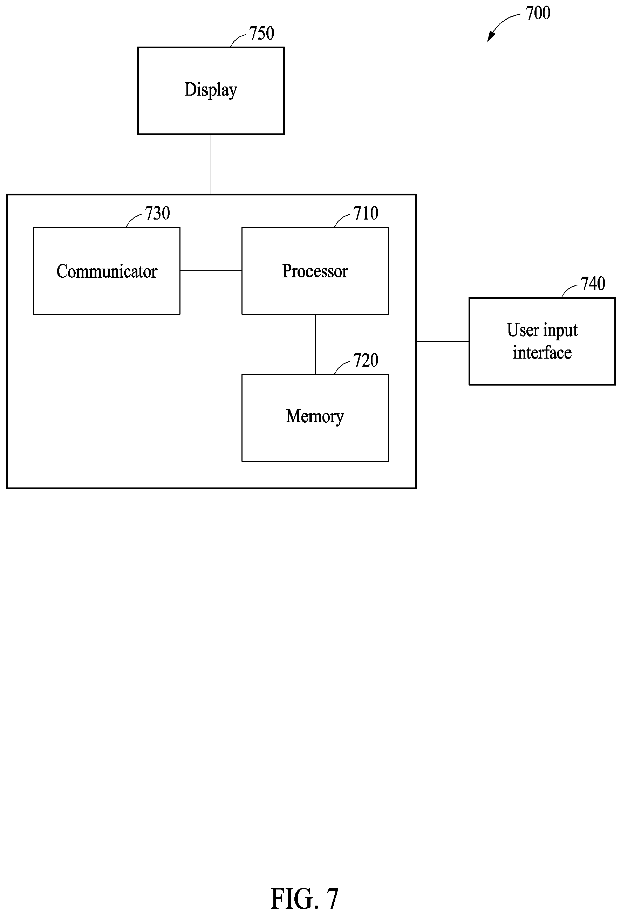

FIG. 7 is a diagram illustrating a configuration of a first device according to an example embodiment.

Referring to FIG. 7, a first device 700 may correspond to the first device described herein. The first device 700 may include a processor 710, a memory 720, and a communicator 730. In addition, depending on an example embodiment, the first device 700 may further include a user input interface 740 and a display 750.

The memory 720 may be connected to the processor 710, and may store instructions executable by the processor 710, data to be calculated by the processor 710, or data processed by the processor 710. The memory 720 may include non-transitory computer-readable media, for example, high-speed random access memory and/or non-volatile computer-readable storage media (for example, one or more disk storage devices, flash memory devices, or other non-volatile solid state memory devices).

The communicator 730 may provide an interface for communicating with an external device (for example, a financial institution system). For example, the communicator 730 may communicate with the external device via a wired or wireless network.

The display 750 may display a screen related to execution of an application. In addition, the user input interface 740 may receive a user selection or user input inputted by a user. The user input interface 740 may be, for example, a touch screen or the like, and may receive a user selection for a minimum unit for dividing an amount of money requested to be issued.

The processor 710 may control the first device 700 to perform one or more operations related to the operation of the first device 700 according to an example embodiment described herein.

For example, the processor 710 may control the first device 700 to request the financial institution system to issue a block key layer for at least a portion of an amount of money retained by a user of the first device 700, and to receive the block key layer from the financial institution system in response to the request.

In addition, the processor 710 may control the first device 700 to receive remittance request data for an amount of remittance from a second device, and to obtain, from the received block key layer, a block key layer corresponding to the amount of remittance.

The processor 710 may control the first device 700 to perform division on the received block key layer when a minimum non-zero unit of the amount of remittance is smaller than a minimum unit of the received block key layer, and to obtain, from a result of the division, the block key layer corresponding to the amount of remittance.

The processor 710 may control the first device 700 to transmit, to the second device, a file for the block key layer corresponding to the amount of remittance.

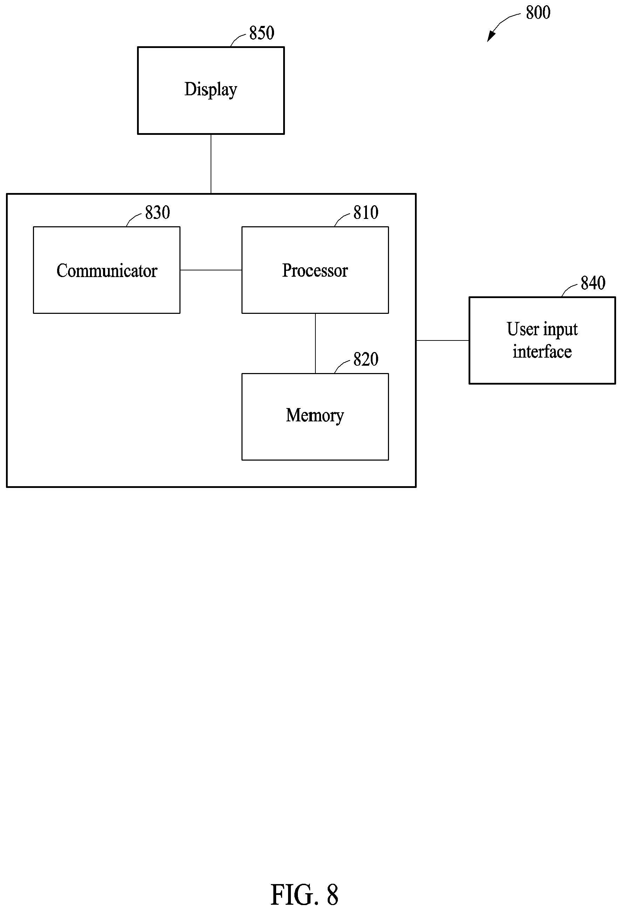

FIG. 8 is a diagram illustrating a configuration of a second device according to an example embodiment.

Referring to FIG. 8, a second device 800 may correspond to the second device described herein. The second device 800 may include a processor 810, a memory 820, and a communicator 830. In addition, depending on an example embodiment, the second device 800 may further include a user input interface 840 and a display 850.

The memory 820 may be connected to the processor 810, and may store instructions executable by the processor 810, data to be calculated by the processor 810, or data processed by the processor 810. The memory 820 may include non-transitory computer-readable media, for example, high-speed random access memory and/or non-volatile computer-readable storage media (for example, one or more disk storage devices, flash memory devices, or other non-volatile solid state memory devices).

The communicator 830 provide an interface for communicating with an external device (for example, a financial institution system). For example, the communicator 830 may communicate with the external device via a wired or wireless network.

The display 850 may display a screen related to execution of an application. In addition, the user input interface 840 may receive a user selection or a user input inputted by a user. The user input interface 840 may be, for example, a touch screen or the like, and may receive a user selection for a minimum unit for dividing a retained amount of money.

The processor 810 may control the second device 800 to perform one or more operations related to the operation of the second device 800 described herein.

For example, the processor 810 may control the second device 800 to generate first data including remittance-related information for allowing the second device 800 to request remittance from the first device, and to transmit the first data to the second device 800. The processor 810 may control the second device 800 to receive encrypted second data from a first device in response to the first data, to generate decryption result data by decrypting, based on unique information of the second device 800, the encrypted second data, to verify the decryption result data, and to store a block key layer included in the verified decryption result data.

The described hardware devices may be configured to act as one or more software modules in order to perform the operations of the above-described example embodiments, or vice versa.

While this disclosure includes example embodiments, it will be apparent to one of ordinary skill in the art that various changes in form and details may be made in these example embodiments without departing from the spirit and scope of the claims and their equivalents. The example embodiments described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

## Claims

1. A method of providing a remittance service performed by a first device, the method comprising:
requesting a financial institution system to issue a block key layer for at least a portion of an amount of money retained by a user of the first device;
receiving the block key layer from the financial institution system in response to the request;
receiving, from a second device, remittance request data for an amount of remittance;
obtaining, from the received block key layer, a block key layer corresponding to the amount of remittance; and
transmitting, to the second device, a file for the block key layer corresponding to the amount of remittance.

2. The method of claim 1, wherein the obtaining of the block key layer comprises:
performing division on the received block key layer, when a minimum non-zero unit of the amount of remittance is smaller than a minimum unit of the received block key layer; and
obtaining, from a result of the division, the block key layer corresponding to the amount of remittance.

3. The method of claim 1 or 2, wherein the financial institution system is configured to:
perform integrity verification by performing decryption on at least some block key layers among remaining block key layers excluding the block key layer corresponding to the amount of remittance, when the first device is connected to a network to transmit the at least some block key layers to the financial institution system, and
add an amount of money corresponding to the at least some block key layers to the amount of money retained by the user of the first device stored in the financial institution system, when integrity is verified.

4. The method of any preceding claim, wherein the transmitting, to the second device, of the file for the block key layer comprises transmitting, to the second device, the file for the block key layer using at least one of a quick response (QR) code, a barcode, near field communication (NFC), and direct communication between the first device and the second device.

5. The method of any preceding claim, wherein the financial institution system is configured to:
generate a block key by performing first encryption in a predetermined minimum unit on an amount of money requested to be issued of the amount of money retained by the user of the first device;
generate a block key layer corresponding to the amount of money requested to be issued using the generated block key, and perform second encryption on the block key layer corresponding to the amount of money requested to be issued; and
transmit, to the first device, the block key layer corresponding to the amount of money requested to be issued on which the second encryption is performed,
wherein the first encryption and the second encryption are performed using different encryption keys,
wherein the financial institution system is configured to generate an upper block key layer using an encrypted lower block key layer, and perform the second encryption on the generated upper block key layer,
wherein the upper block key layer includes a plurality of lower block key layers and a confirmation key.

6. The method of claim 5, wherein the predetermined minimum unit is a smallest unit for dividing an amount of money into blocks, and is determined based on a user selection.

7. A method of providing a remittance service performed by a second device, the method comprising:
generating first data including remittance-related information for requesting remittance from a first device;
transmitting the first data to the first device;
receiving encrypted second data from the first device in response to the first data;
generating decryption result data by decrypting, based on unique information of the second device, the encrypted second data; and
verifying the decryption result data, and storing a block key layer included in the verified decryption result data.

8. The method of claim 7, wherein the remittance-related information includes at least one of an amount of remittance, a key of the second device, a transaction number, and an identification number of the second device,
wherein the unique information of the second device includes a key of the second device, and a transaction number on transaction details of a user corresponding to the second device.

9. A first device that performs a method of providing a remittance service, the first device comprising:
a memory; and
a processor,
wherein the memory is configured to store instructions executable by the processor, and
when the instructions are executed by the processor, the processor is configured to control the first device to:
request a financial institution system to issue a block key layer for at least a portion of an amount of money retained by a user of the first device;
receive the block key layer from the financial institution system in response to the request;
receive, from a second device, remittance request data for an amount of remittance;
obtain, from the received block key layer, a block key layer corresponding to the amount of remittance; and
transmit, to the second device, a file for the block key layer corresponding to the amount of remittance.

10. The first device of claim 9, wherein the processor is configured to control the first device to:
perform division on the received block key layer, when a minimum non-zero unit of the amount of remittance is smaller than a minimum unit of the received block key layer; and
obtain, from a result of the division, the block key layer corresponding to the amount of remittance.

11. The first device of claim 9 or 10, wherein the financial institution system is configured to:
perform integrity verification by performing decryption on at least some block key layers among remaining block key layers excluding the block key layer corresponding to the amount of remittance, when the first device is connected to a network to transmit the at least some block key layers to the financial institution system, and
add an amount of money corresponding to the at least some block key layers to the amount of money retained by the user of the first device stored in the financial institution system, when integrity is verified.

12. The first device of any of claims 9 to 11, wherein the processor is configured to control the first device to transmit, to the second device, the file for the block key layer using at least one of a QR code, a barcode, NFC, and direct communication between the first device and the second device.

13. The first device of any of claims 9 to 12, wherein the financial institution system is configured to:
generate a block key by performing first encryption in a predetermined minimum unit on an amount of money requested to be issued of the amount of money retained by the user of the first device;
generate a block key layer corresponding to the amount of money requested to be issued using the generated block key, and perform second encryption on the block key layer corresponding to the amount of money requested to be issued; and
transmit, to the first device, the block key layer corresponding to the amount of money requested to be issued on which the second encryption is performed.

14. A second device that performs a method of providing a remittance service, the second device comprising:
a memory; and
a processor,
wherein the memory is configured to store instructions executable by the processor, and
when the instructions are executed by the processor, the processor is configured to control the second device to:
generate first data including remittance-related information for requesting remittance from a first device;
transmit the first data to the first device;
receive encrypted second data from the first device in response to the first data;
generate decryption result data by decrypting, based on unique information of the second device, the encrypted second data; and
verify the decryption result data, and store a block key layer included in the verified decryption result data.

15. The device of claim 14, wherein the remittance-related information includes at least one of an amount of remittance, a key of the second device, a transaction number, and an identification number of the second device,
wherein the unique information of the second device includes a key of the second device, and a transaction number on transaction details of a user corresponding to the second device.
